# EUROPEAN PATENT APPLICATION

(11) **EP 1 569 011 A1**
(43) Date of publication of application: **31.08.2005**
(21) Application number: 03758125.3
(22) Date of filing: 17.10.2003
(51) Int. Cl.: G01S 17/89

(54) **SYSTEM OF DISPLAYING SEA-BED IMAGES**

(30) Priority: 18.10.2002 ES 200202402
(71) Applicant: Munoz Leo, José, 45600 Talavera de la Reina (Toledo) (ES)
(72) Inventor: Munoz Leo, José, 45600 Talavera de la Reina (Toledo) (ES)
(74) Representative: Pons Arino, Angel
(86) International application number: PCT/ES2003/000527
(87) International publication number: WO 2004/036247

(57) **Abstract**

The present invention relates to a system for visualizing images of the sea-bottom with acceptable resolution up to a few hundred meter depths, and which may serve as well to image the bottom of other water volumes such as lakes or rivers. The system uses the combined operation of pulsed illumination with a light beam, an aiming/expansion system for the illuminating light beam, a detector of light reflected from the bottom, an optical device coupled to the detector which selectively amplifies/blocks the light entering the detector, an electronic system for exploration of a portion of the volume bottom and for synchronism of the system, and an electrical signal processing unit which generates an image of the volume bottom that can be displayed in a conventional TV monitor. The system discriminates the light reflected from the sea bottom against the light backscattered by the intermediate volume of water.

## Description

Imaging a considerable portion of the sea-bottom is currently done by directly submerging a camera and an illumination source linked to a ship by cables.

This technique allows for exploration of only a small portion of the sea bottom. Exploring larger portions requires towing the camera and illumination source or hoisting them back to the ship if the ship must change position quickly. This represents an inconvenience.

On the other hand, other alternative systems like the sonar are not effective in swallow waters. Further, the long wavelength associated to the characteristic frequency spectrum of their pulses limits the attainable resolution.

### SUMMARY OF THE INVENTION

The system invented serves in an optimal manner to explore with high resolution the bottom of a large portion of an aqueous volume such as a sea or a lake. It only requires to be slightly submerged -one meter or less- in order to capture underwater images from a considerable depth, thus allowing for towing the system or quickly hoisting it back to the ship if the ship position must change. Further, the system may be adjusted to operate either on an expanded beam basis or on a concentrated beam basis according with the depth to image, thus optimizing illumination and resolution.

When exploring small depths, the system operates with an expanded illuminating beam, and generates two-dimensional images of the illuminated zone with a conventional TV system comprising an intensified camera and a TV monitor. When exploring regions of greater depth, a concentrated beam illuminates a small portion -namely a point- of the volume bottom. The concentrated beam is scanned in two dimensions by a scanning system and light reflected from the bottom is directed to a single detector. An electric current with sequential information of the scanned bottom region is delivered by the detector, which allows for generating a conventional composite video signal that can be displayed on a TV monitor.

According to this description and to the invention, the system is based on a combined operation of high gain detectors and narrowband laser light illumination, and comprises at least the following elements:
- A source of pulsed light, preferably a laser, which operates in a spectral range where light attenuation in the medium -such as sea water- is minimum. The short duration light pulses may be emitted in an extended or concentrated beam. In this later case a scanning is made in a certain direction and light is partially reflected.
- An aiming/expansion system of the pulsed light beam, preferably based on galvanometric mirrors or electro-optic or acousto-optic deflectors.
- A detector of light reflected from the sea bottom. The preferred detector to be used in combination with extended beam illumination is a conventional solid-state TV camera based on a two-dimensional array of photosensitive detectors (pixels), which allows for capturing images of the illuminated area. A single photodetector should be used in case of illuminating with a concentrated beam. An electric current pulse of temporal characteristics similar to those of the reflected light pulse is then generated in the photodetector.
- An optical device coupled to the detector which may selectively act as an intensifier/shutter of the received light, and which allows light into the detector only at specific times in order to avoid undesired backscattered light from the medium entering the detector. With this optical device the reflected light is discriminated against the light backscattered by preventing light from reaching the detector for a time duration equal to the round-trip time needed by the emitted light pulse to reach the target and travel back to the detector. This device should be an image intensifier tube or a photomultiplier with a built-in gating capability. Photodetection can be selectively blocked or allowed by positive or negative biasing of the photocathode with a duty cycle that may be varied between 0 % and 100 %. Optionally additional image intensifier tubes may be cascaded to extend the system operation range.
- An electronic exploration/synchronism system which compares the energies of the emitted and detected light pulses and provides the information required for aiming the light beam and for estimating the time of flight of the pulses to avoid undesired backscattered light from reaching the detector through the image intensifier tube.
- An electronic system for processing the information received and which generates an image that can be displayed in the monitor.

In this way, a two-dimensional scanning of the concentrated light beam with the aiming system generates sequential information of the light intensity reflected by the illuminated points of the volume bottom, this information being electronically processed to generate a conventional composite video signal that can be displayed in the monitor.

In case of using an extended beam, light reflected from the volume bottom is captured by a TV camera which delivers a conventional video signal.

### DESCRIPTION OF THE PREFERRED EMBODIMENT

The system invented is composed of a laser source 1 which emits short-duration light pulses in a spectral range where the sea water attenuation is minimum and where the instantaneous direction of the illuminating beam and its size is determined by an aiming system 2 including galvanometric scanning mirrors and optionally a beam expander (not shown in the drawing).

Upon incidence on the sea bottom 11 along the aimed direction 8, a fraction of the reflected light travels toward an optical system 5 which selectively intensifies/blocks the light entering the detector 4.

The optical device 5 discriminates reflected light against light backscattered by the intermediate medium volume by remaining shut until light directly reflected from the bottom is received.

The detector 4 to be used in combination with an extended beam is an intensified TV camera which pixels receive the two-dimensional reflected beam and directly generates a two-dimensional video image. Optionally, a low noise detector incorporating internal gain by ion impact or avalanche can be used, thus amplifying the photogenerated current stored in its series register previously to a read-out of the video signal, therefore avoiding the need of an image intensifier tube.

The TV camera used for light detection in this case of extended illumination should preferably be a solid state camera based on a CCD or CMOS image sensor and includes, like all cameras of this kind, an internal two-dimensional array of individual detectors (pixels) which provide the sequential information stored in the series register of the camera to form a two-dimensional video image. The signal level corresponding to each position in the series register is determined by the electric charge photogenerated in an individual detector of the two-dimensional array. Typically the photogenerated charge in each individual detector provides information of the light power received at the spatial location of the individual detector within the whole two-dimensional array. charge chargeindividual detectors necessary to generate a two-dimensional image.

In case of concentrated beam illumination, the detector may be a photomultiplier tube, a photodiode or an avalanche photodiode where an electric current pulse is internally generated, said pulse displaying similar time-dependence characteristics as the pulse of reflected light.

The instants of light pulse emission and enabling in system 5 are controlled by an exploring and synchronism electronic system 3. The information signal received is electronically processed by a signal processing system 6 and then displayed as a two-dimensional image on the monitor screen 7.

The image intensifier tube 5 should include an active gating control of the photocathode bias voltage. The intensifier should also include a microchannel plate (not shown in the drawing) where the bias voltage may be manually or automatically varied in order to control the optical gain of the system. The intensifier may be either a second- or third-generation intensifier but in any case the system sensitivity should be optimized for the blue-green spectral region.

A diode-pumped solid state laser should be used preferably. Diffraction in the laser beam should be as low as possible in order to maximize the depth and resolution achievable for a given optical power. Ideally, a laser emitting a gausian laser beam with an M² parameter as close to unity as possible should be used, such as a diode-pumped intracavity converted or frequency-doubled or self-frequency-doubled infrared laser which operates on one of the 4F3/2->4I11/2 or 4F3/2->4I11/2 of Nd3+ ion or alternatively an Yb3+ based laser.

### DRAWINGS

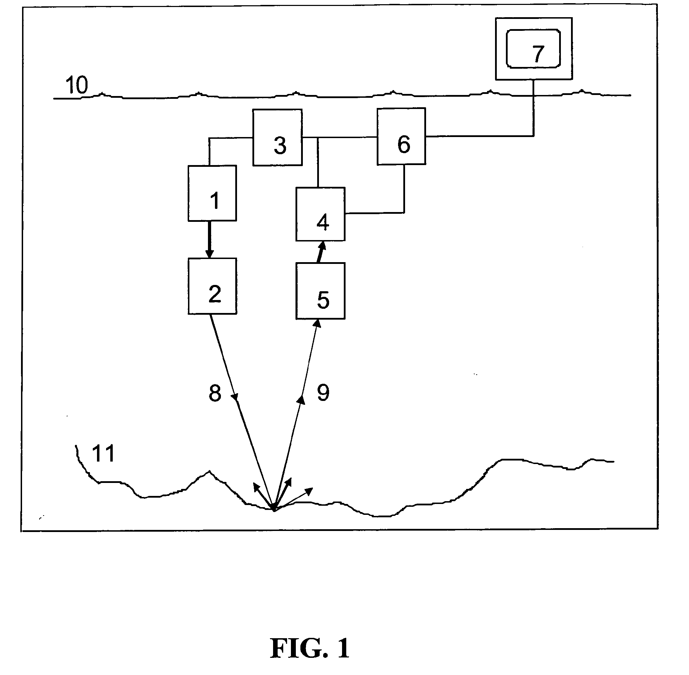

FIG. 1 - Schematic representation of the invented system.

## Claims

1. A system for imaging the sea bottom comprising at least; a source of pulsed light in an expanded or concentrated beam; an aiming and focusing system of said pulsed light beam; a detector of light reflected form said light pulses; an optical system coupled to the detector which may selectively act as a light intensifier/shutter; an electronic system for exploring and synchronism; an electronic processing system which generates an image that can be displayed on a monitor.

2. A system according to claim 1 which in case of using a concentrated beam the detector receives information from a scene in sequential form, as a result of a synchronized two-dimensional scanning or sampling of said scene by the pulsed beam and where the detector receives an integrated illumination from a reduced portion of the total scene.

3. A system according to claim 1 which in case of using an expanded beam the detector consists of a two-dimensional array of single detectors on which an image is focused prior to detection.

4. A system according to claim 1 wherein the detector/detectors used are submerged inside the sea water.

5. A system according to claim 1 which in case of expanded beam illumination the image intensifier/shutter device is an image intensifier tube or it is integrated in the detector itself.

6. A system according to claim 3 wherein the detector is a solid state CCD or CMOS TV camera.

7. A system according to claims 5 and 6 wherein the image provided by the intensifier tube is couple to the detector by means of an optical system.

8. A system according to claims 5 and 6 wherein the image provided by the image intensifier tube is coupled to the camera by electron bombardment of the sensitive elements of the camera, thus integrating the image intensifier tube and the camera in a single device.

9. A system according to claim 5 wherein the selective image intensifier/shutter device performs a temporal windowing based on the inversion of the photocathode bias in said intensifier/shutter device.

10. A system according to claim 1 wherein the selective intensifier/shutter device performs a temporal windowing which allows operation in a wide range of illuminations, including daylight, by means of controlling the operation duty cycle of the photocathode bias voltage or of the detector shutter device.

11. A system according to claims 5 and 6 wherein the intensifier-camera set is replaced by a CCD or CMOS camera that may operate under extremely low illumination levels.

12. A system according to claims 6 and 11 wherein the CCD or CMOS camera includes detectors or sensors in which the photogenerated electric charge is amplified in the detector itself by means of charge carrier avalanche or ion impact prior to generation of the output electric signal stored in its series register.

13. A system according to claim 1 wherein the pulsed illumination source is a laser source.

14. A system according to claim 13 wherein the laser source operates in the blue-green region of the visible spectrum, corresponding to the spectral region where light attenuation in sea water is minimum.

15. A system according to claim 13 wherein the laser source is based on a semiconductor diode-laser pumped primary oscillation in rare earth ions and which is subsequently converted by means of a nonlinear optical material to another frequency more suitable for operation of the system.

16. A system according to claims 9, 10 and 13 wherein the illuminating laser source operates in a pulsed mode which is synchronized to the temporal windowing of the image intensifier/shutter device in order to select the working distance and distance interval of the light reflected to the detector.

17. A system according to claim 2 wherein the detector used is a photomultiplier tube.

18. A system according to claim 2 wherein the detector used is an avalanche photodiode.

19. A system according to claim 3 wherein the detector is a conventional CCD or CMOS TV camera which does not include any image intensifier device.

20. A system according to claim 2 wherein the scanning is made with an electro-optic or acousto-optic device.

21. A system according to claim 2 wherein the detector is continuously aimed at the point or zone of the scene illuminated by the scanned being illuminated.
